# EUROPEAN PATENT APPLICATION

(11) **EP 3 611 950 A1**
(43) Date of publication of application: **19.02.2020**
(21) Application number: 18306109.2
(22) Date of filing: 13.08.2018
(51) Int. Cl.: H04W 12/04, H04W 12/06

(54) **METHOD FOR TRANSFERRING FROM A FIRST DEVICE A KEY TO A SECOND DEVICE IN A TELECOMMUNICATION NETWORK**

(71) Applicant: Thales Dis France SA, 92190 Meudon (FR)
(72) Inventor: MOSSE, Franck, 13881 GEMENOS cedex (FR); SAHLI, Chaouki, 13881 GEMENOS cedex (FR); MERLIN, Olivier, 13881 GEMENOS cedex (FR)
(74) Representative: Scheer, Luc

(57) **Abstract**

The invention concerns especially a method for transferring from a first device (10) a key to a second device (11) in a telecommunication network, the method comprising:
- Generating a time-based key at the first device (10);
- Transmitting the time-based key from the first device (10) to the second device (11);
- Authenticating the first device (10) and the second device (11) at the level of the telecommunication network for temporarily granting access to the telecommunication network to the second device (11).

## Description

The invention concerns telecommunications and in particular the share of subscriptions between devices like smartphones for example.

A subscriber to a telecommunication network pays for his subscription. However, he cannot share his subscription with other people or apparatuses like M2M modules for example.

The object of the invention is to allow such a feature, for free.

The main goal of the invention is to be able to derive a temporary subscription from a main subscription using a time based information and to transfer this subscription to another device in order to establish a GSM network connection on behalf of the main subscription. This derived subscription could be used only during a specific period of time due to the use of a time based derivative algorithm.

More precisely, the invention proposes a method for transferring from a first device a key to a second device in a telecommunication network, the method comprising:
a) Generating a time-based key at the first device;
b) Transmitting the time-based key from the first device to the second device;
c) Authenticating the first device and the second device at the level of the telecommunication network for temporarily granting access to the telecommunication network to the second device.

Preferably, the electrical profile without the Ki of the first device is transferred to the second device before step a).

Advantageously, the time-based key and the IMSI of the first device are transmitted to the telecommunication network by the second device at step c).

The invention also concerns a HLR configured to compute a time-based key based on an IMSI received from a VLR, the HLR being configured for sending to the VLR a RAND, the RAND being signed by the time-based key, and the RAND signed by the Ki of a recognized subscriber.

The invention also concerns a VLR configured to receive from a HLR a RAND, the RAND being signed by the time-based key, and the RAND signed by the Ki of a recognized subscriber by the HLR, the VLR being arranged to check the RAND signed by the time-based key, and the RAND signed by the Ki of a recognized subscriber in order to authenticate the subscriber.

The invention also concerns a secure element designed for cooperating with a device, called first device, the secure element comprising an application for generating a time-based key to be transmitted to a second device.

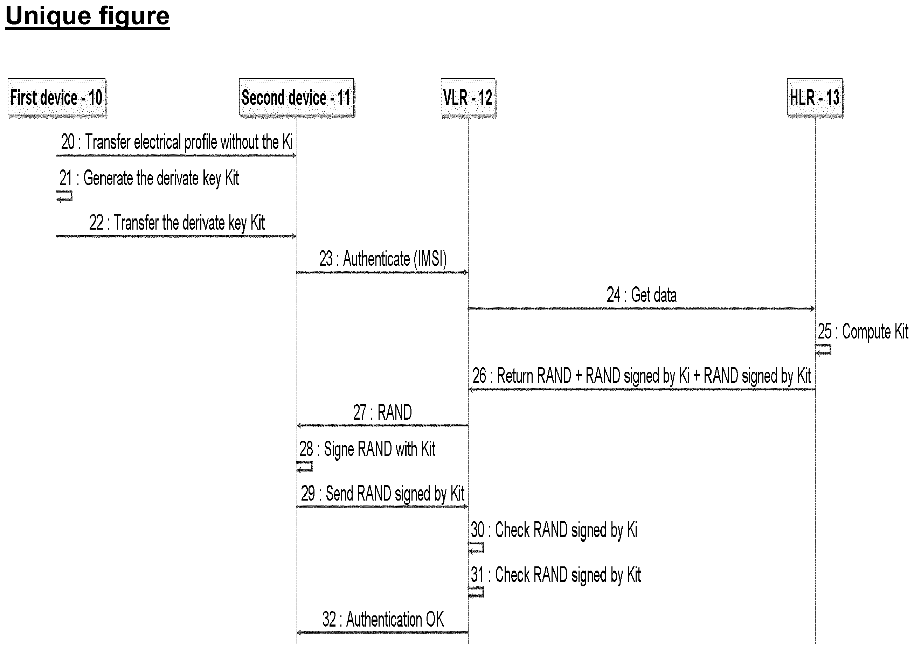

The invention will be better understood by reading the following description of the unique figure that represents the different steps of the method of the invention.

In this figure, a first device 10 comprises a security element (a SIM card, a eUICC (embedded UICC) or a iUICC (integrated UICC)) comprising a secret key Ki and an IMSI. The key Ki is the 128-bit individual Subscriber Authentication Key utilized as a secret key shared between the first device 10 and the Home Location Register 13 (HLR) of the subscriber's home network.

The user of this first device 10 has previously purchased a subscription from a MNO (Mobile Network Operator) and has the possibility to communicate with the telecommunication network of this MNO (here only a part of the network is represented, a VLR 12 and the HLR 13 of a MSC).

In the scope of the invention, the user of the first device 10 wishes to allow a second device 11 to temporarily communicate with the network. In this respect, after having just once (during a registration step) transferred his electrical profile to the second device 11 (the electrical profile can comprise its IMSI), at step 20, the first device computes at step 21 a time-based key Kiₜ.

The purpose of the invention is to make a subscription moveable (nomadic) so that it can be securely distributed for a one shot usage on an unsecured device. The main goal is to derive the Ki key used for network authentication with a pseudo-random function based on a specific time and use this information to derive the Ki in order to generate a Kiₜ key ("t" standing for "time-based" or "temporary") used instead for network authentication. This key kiₜ when generated could only be distributed to an external (second) device and used during a specific time range, for example one minute.

A step 22, the key Kiₜ is transmitted from the first device 10 to the second device 11, along with the IMSI of the first device 10 if this IMSI was not transferred earlier, during the registration step. The algorithm used to generate the time-based key Kiₜ must not be a reverse algorithm. It could be like the A8 algorithm used for network key generation but must contain a time based information as a pseudo-random function. As the first device knows the time, the HLR is synchronized with it and can generate the same key.

The second device 11 then comprises the electrical profile of the first device and this temporary key Kiₜ. It then tries to authenticate itself (Authentication Request message at step 23) on the network by sending the IMSI of the first device 10 to the VLR 12. At step 24, the VLR 12 sends a command to the HLR 13 (Get data) comprising the IMSI. The HLR 13 then computes (step 25) the same key Kiₜ that was computed at step 21 (the HLR 13 knows the Ki key associated to the IMSI, it can use the same based time algorithm to compute on its side the same Kiₜ key as the first device 10). Based on the IMSI, the VLR can use both the signed RAND Ki and the RAND signed by Kiₜ to authenticate the incoming connection. Note that the HLR 13 must compute the Kiₜ only when the first authentication request is received by the VLR 12.

At step 26, the HLR 13 sends to the VLR 12 the following data:
- A random value RAND;
- RAND signed by Ki;
- RAND signed by Kiₜ.

RAND is 128-bit random challenge generated by the Home Location Register 13.

A step 27, the VLR 12 sends to the second device 11 the random value RAND. At step 28, the second device 11 signs the random value RAND with Kiₜ and sends this signed value to the VLR 12 (step 29). The VLR 12 can then check (step 30) if the RAND signed by Ki received from the HLR 13 is the same than RAND signed locally by Ki and (step 31), if the RAND signed by Kiₜ received from the HLR 13 is the same than the one received from the second device 11.

If one of these both random checks is positive, the VLR 12 can send (step 32) an authentication OK message. Here, if check 31 is positive, the authentication message is sent to the second device 11 (if check 30 is positive, the authentication message is sent to the first device 10). The secondary device can now communicate with the network for a given laps of time, for example one minute. If no check is positive, authentication fails.

The invention is applicable to all over the air authentication mechanism based on an algorithm A3/A8 with shared secret keys (2G, 3G, 4G or 5G).

If the key kiₜ is used after the allowed time range then this key will be rejected by the HLR 13 and then by the VLR 12, that means that the subscriber will not authenticate onto the network. The mechanism of the invention could be used, for example, on automotive use-cases and allow GSM modules installed in cars to be free of subscription. When the owner of the car enters in his car with its main subscription device (handset or other device he is owning), a derived subscription is generated based on the current time and transferred to the GSM module fixed inside the car using a Bluetooth, Wifi or other contactless protocol. This temporary subscription could then be used to initiate a connection to the GSM network on behalf of the car owner during a specific period of time.

The main advantage of the present invention is that a derivative subscription is used in order to authenticate subscriber to a network. Subscription is no more associated physically to a device. A single subscription could be used by several devices successively. GSM devices could be free of subscription and configured on demand by a derivative subscription.

Finally, to be clear, to authenticate a subscriber, a GSM network requires the IMSI and Ki shared key information. As we do not want to transfer the secret Ki to the secondary device, the main device has to generate the Kiₜ key using a time based information and algorithm known by both the main device and the HLR 13. This is this couple of IMSI/Kiₜ that will be transferred to the secondary device and used to authenticate the secondary device on the network.

The invention also concerns a HLR 13 configured to compute a time-based key based on an IMSI received from a VLR 12, the HLR 13 being configured for sending to the VLR 12 a RAND, the RAND being signed by the time-based key, and the RAND signed by the Ki of a recognized subscriber.

The invention also concerns a VLR 12 configured to receive from a HLR 13 a RAND, the RAND being signed by the time-based key, and the RAND signed by the Ki of a recognized subscriber by the HLR 13, the VLR 12 being arranged to check the RAND signed by the time-based key, and the RAND signed by the Ki of a recognized subscriber in order to authenticate the subscriber. The invention also concerns a secure element designed for cooperating with a device 10, the secure element comprising an application for generating a time-based key to be transmitted to a second device 11.

## Claims

1. A method for transferring from a first device (10) a key to a second device (11) in a telecommunication network, said method comprising:
a) Generating a time-based key at said first device (10);
b) Transmitting said time-based key from said first device (10) to said second device (11);
c) Authenticating said first device (10) and said second device (11) at the level of said telecommunication network for temporarily granting access to said telecommunication network to said second device (11).

2. A method according to claim 1, wherein the electrical profile without the Ki of said first device (10) is transferred to said second device (11) before step a).

3. A method according to any of the claims 1 and 2, wherein said time-based key and the IMSI of said first device (10) are transmitted to said telecommunication network by said second device (11) at step c).

4. A HLR (13) configured to compute a time-based key based on an IMSI received from a VLR (12), said HLR (13) being configured for sending to said VLR (12) a RAND, said RAND being signed by said time-based key, and said RAND signed by the Ki of a recognized subscriber.

5. A VLR (12) configured to receive from a HLR (13) a RAND, said RAND being signed by said time-based key, and said RAND signed by the Ki of a recognized subscriber by said HLR (13), said VLR (12) being arranged to check said RAND signed by said time-based key, and said RAND signed by the Ki of a recognized subscriber in order to authenticate said subscriber.

6. A secure element designed for cooperating with a device, called first device (10), said secure element comprising an application for generating a time-based key to be transmitted to a second device (11).
